(19) Europäisches Patentamt
European Patent Office
Office européen des brevets

(11) Veröffentlichungsnummer: **0 092 108**
**B1**

(12) # EUROPÄISCHE PATENTSCHRIFT

(45) Veröffentlichungstag der Patentschrift: **23.09.87**

(51) Int. Cl.⁴: **C 02 F 1/66**, C 01 G 49/06, C 01 B 33/28, C 10 K 1/20

(21) Anmeldenummer: **83103362.6**

(22) Anmeldetag: **06.04.83**

(54) **Verfahren zur Aufarbeitung von aluminium- und eisenhaltigen sauren Abwässern.**

(30) Priorität: **15.04.82 DE 3213932**

(43) Veröffentlichungstag der Anmeldung: **26.10.83 Patentblatt 83/43**

(45) Bekanntmachung des Hinweises auf die Patenterteilung: **23.09.87 Patentblatt 87/39**

(84) Benannte Vertragsstaaten: **AT BE CH DE FR GB IT LI LU NL SE**

(56) Entgegenhaltungen:
**DE-A-1 517 728**
**GB-A-1 218 601**
**US-A-3 425 800**
**US-A-3 494 864**
**US-A-3 798 160**
**US-A-4 006 080**

**CHEMICAL ABSTRACTS, Band 87, Nr. 12, September 19, 1977, Seite 139, Nr. 87195 k, COLUMBUS OHIO (US)**

(73) Patentinhaber: **SÜD- CHEMIE AG, Lenbachplatz 6, D-8000 München 2 (DE)**

(72) Erfinder: **Fahn, Rudolf, Dr. Dipl.- Chem., Figurenweg 5, D-8051 Gammelsdorf (DE)**
Erfinder: **Buckl, Hans, Dr. Dipl.- Chem., Eberhardsweg 2, D-8050 Freising- Tüntenhausen (DE)**

(74) Vertreter: **Patentanwälte Dipl.- Ing. Splanemann Dipl.- Chem. Dr. B. Reitzner, Tal 13, D-8000 München 2 (DE)**

**EP 0 092 108 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Verfahren zur Aufarbeitung von aluminium- und eisenhaltigen sauren Abwässern.

Bisher war es üblich, derartige saure Abwässer entweder zu neutralisieren und in die Flüsse zu leiten oder im Meer zu verklappen.

Diese Beseitigungsmethoden sind jedoch aus Gründen des Umweltschutzes bedenklich. Ferner haftet ihnen der Nachteil an, daß die in den sauren Abwässern enthaltenen Substanzen, insbesondere Aluminium und Eisen, nicht mehr verwertet werden können.

Man hat deshalb bereits nach anderen Verwertungsmöglichkeiten gesucht, wobei z. B. die bei der Herstellung von Bleicherde anfallenden sauren Abwässer zusammen mit Aktivbentonit als anorganische Fällungs-, Flockungs-, Trennungs- und Absorptionsmittel für die Behandlung von industriellen und kommunalen Abwässern verwendet wurden.

Auf diese Weise kann jedoch nur ein verhältnismäßig geringer Bruchteil der anfallenden sauren Abwässer verwertet werden.

Aus der US-A-40 06 080 ist ein Verfahren zur Behandlung von schwefelsauren Abwässern bekannt, bei den durch Zugabe von löslichen Calciumsalzen zunächst Calciumsulfat ausgefällt wird. Die Mutterlauge wird dann mit Calciumoxid das vorzugsweise durch reduzierende Calcinierung des in der ersten Stufe erzeugten Calciumsulfats erhalten wurde, neutralisiert, wobei ein vorzugsweise aus Eisenhydroxid bestehender Niederschlag erhalten wird, der nach dem Trocknen und Erhitzen z. B. für Landauffüllungen oder als Rohstoff für anderen Prozesse verwendet werden kann.

Aus der US-A-34 25 800 ist ein Verfahren zur Herstellung von Zeolithen bekannt, bei den als Ausgangsmaterialien u.a. Aluminatlösungen verwendet werden. Über die Herkunft dieser Aluminat lösungen finden sich jedoch keine Angaben.

Aus der GB-A-12 18 601 ist ein Verfahren zur Neutralisation von salzsauren Beizlaugen bekannt, die Eisen-(III)-chlorid enthalten, wobei dieses durch Zusatz eines Gemisches aus Calciumcarbonat und Calciumoxid unter Zugabe von Luft als Eisen-(III)-oxidhydrat ausgefällt wird. Über dessen Weiterverarbeitung finden sich keine Hinweise.

Der Erfindung liegt die Aufgabe zugrunde, ein Verfahren zur Aufarbeitung von aluminium- und eisenhaltigen sauren Abwässern zu finden, wodurch nicht nur die bisherige umweltbelastende Beseitigung entfallen kann, sondern auch die Inhaltsstoffe der Abwässer in technisch wertvolle Produkte übergeführt werden können.

Gegenstand der Erfindung ist somit ein Verfahren zur Aufarbeitung von aluminium- und eisenhaltigen sauren Abwässern, wobei man

(a) die kleine Mengen an kolloidaler Kieselsäure enthaltenden sauren Abwässer zur Ausfällung des Aluminiumhydroxids und des Eisen-(III)-Oxidhydrats bis knapp unter den Siedepunkt erhitzt und mit Calciumoxid und/oder Calciumhydroxid neutralisiert

(b) den erhaltenen Aluminiumhydroxid-Eisen-(III)-Hydroxid-Niederschlag bis zur Auflösung des Aluminiumhydroxids als Aluminat mit Natriumhydroxid behandelt;

(c) den hinterbleibenden Eisen-(III)-Oxidhydrat-Niederschlag von der Natriumaluminatlösung abtrennt, auswäscht trocknet und das Eisen-(III)-Oxidhydrat zur Verwendung als Gasreinigungsmasse pelletiert oder durch thermische Behandlung in zur Verwendung als Pigment geeignetes Eisen-(III)-Oxid überführt;

(d) und die Natriumaluminatlösung durch Umsetzen mit einer Wasserglaslösung in einem kristallinen Zeolith überführt.

Bei den erfindungsgemäß aufarbeitbaren sauren Abwässern handelt es sich in erster Linie um die bei der Bleicherdegewinnung anfallenden Abwässer, die geringe Mengen an kolloidaler Kieselsäure enthalten. Diese Kieselsäureteilchen wirken offenbar bei der Zeolithbildung (Stufe d) als Kristallisationskeime, da überraschenderweise festgestellt wurde, daß die Zeolithbildung langsamer erfolgt, wenn die Aluminatlösung kieselsäurefrei ist.

Was letzten Endes aber der Grund für die verbesserte Kristallbildung in Stufe (d) ist, ist noch nicht genau bekannt. Tatsache ist lediglich die überraschende Verbesserung der Zeolithbildung in Anwesenheit der Kieselsäure.

Im allgemeinen haben die verwendeten sauren Abwässer aus der Bleicherdefabrikation folgende analytische Zusammensetzung:

$Al^{3+}$ 12 bis 16 g/Liter;
$Fe^{3+}$ 4 bis 6 g/Liter;
$Ca^{2+}$ 2 bis 4 g/Liter;
$Mg^{2+}$ 2 bis 4 g/Liter;
$SiO_2$ 0.2 bis 0.4 g/Liter;
$Cl^-$ 65 bis 90 g/Liter;
freie HCl 4 bis 6 g/Liter.

Vorzugsweise werden die sauren Abwässer in der Stufe (a) bis auf einen pH-Wert von 3 bis 8, vorzugsweise von 6,6 bis 6,7 neutralisiert.

Falls das Eisen bzw. ein Teil des Eisens in den Abwässern im zweiwertigen Zustand vorliegt, erfolgt die Ausfällung in der Stufe (a) zweckmäßig dadurch, daß das Abwasser mit einem sauerstoffhaltigen Gas in Berührung gebracht wird. Im allgemeinen wird hierzu Luft durch die Lösung geblasen; das hierbei erhaltene Eisen-(III)-Oxidhydrat ist besonders gut als Gasreinigungsmasse geeignet.

Die bevorzugt verwendeten sauren Abwässer enthalten das Aluminium und Eisen (und ggf. die anderen Metalle) in Form der entsprechenden Chloride. Weiterhin enthalten sie noch etwas freie HCl.

Man kann aber auch von schwefelsauren Abwässern ausgehen, wobei man vor der Stufe (a) eine Vorneutralisation mit Calciumoxid und/oder Calciumhydroxid bis zu einem pH-Wert von weniger als etwa 3,0 vornimmt und das

abgeschiedene Calciumsulfat abfiltriert.

Der nach Stufe (d) hergestellte Zeolith wird als Molekularsieb bzw. als Absorptionsmittel verwendet.

Es handelt sich hierbei in erster Linie um Y-Zeolithe, die, wie vorstehend erläutert, offenbar aufgrund der Anwesenheit der genannten "Keimbildungssubstanzen" in einer gut kristallinen Form anfallen. Mit den gleichen Ausgangsmaterialien lassen sich auch Zeolithe vom A- und Y-Typ herstellen.

Die Ausfällung des Aluminiumhydroxids und des Eisen-(III)-Oxidhydrats in der Stufe (a) wird im allgemeinen wie folgt durchgeführt:

Die salzsauren, Aluminiumchlorid und Eisenchlorid enthaltenden Abwässer werden durch Einblasen von überhitztem Dampf zunächst auf knapp unter dem Siedepunkt erhitzt. Darauf erfolgte unter weiterem Dampfeinblasen die Neutralisation auf ca. pH 6,6, wobei ein Gemisch aus Aluminiumhydroxid und Eisen-(III)-Oxidhydrat ausfällt.

Die Behandlung des Aluminiumhydroxid-Eisen-(III)-Oxidhydrat-Niederschlags mit Natriumhydroxid in der Stufe (b) wird im allgemeinen wie folgt durchgeführt:

Nach dem Abfiltrieren und Waschen des Hydroxidniederschlags wird dem Hydroxidgemisch Ätznatron hinzugefügt, und das Aluminiumhydroxid wird in das Natriumaluminat übergeführt.

Die Weiterbehandlung des Eisen-(III)-Oxidhydrats in der Stufe (c) geschieht im allgemeinen wie folgt:

Das Eisen-(III)-Oxidhydrat wird vom gelösten Aluminat abfiltriert und aluminatfrei gewaschen. Die Trocknung des für die Gasreinigung vorgesehenen Materials erfolgt bei 60 bis 110°C. Für den Einsatz in der Anlage zur Entfernung von Schwefelwasserstoff aus einem Gasgemisch wird das Eisan-(III)-Oxidhydrat unter Zusatz eines Preßhilfsmittels zu Pellets verformt.

Das als Pigment verwendbare Eisen-(III)-oxid erhält man durch Calcinieren des Oxidhydrats bei 600°C.

Das erfindungsgemäß erhaltene Eisen-(III)-Oxidhydrat eignet sich besonders gut zur Gasreinigung, d.h. zur Entfernung von Schwefelwasserstoff aus den unterschiedlichsten Gasgemischen.

So wurden zur Gasreinigung die $H_2S$-enthaltenden Gase über die pelletierten, in Reaktoren untergebrachten Eisen-(III)-Oxidhydrat-Massen geleitet. Dabei reagiert das mehr oder weniger stark hydratisierte Eisenoxid mit Schwefelwasserstoff gemäß

$$Fe_2O_3 + 3H_2S \rightarrow Fe_2S_3 + 3H_2O + 14{,}9\ \text{kcal.}$$

Die Überführung der in Stufe (d) erhaltenen Natriumaluminatlösung in einen kristallinen Y-Zeolith wird im allgemeinen wie folgt durchgeführt:

Nach an sich bekannten Verfahren wird ein kristallisierter Y-Zeolith so hergestellt, daß man durch Reaktion von Natriumaluminat mit Natriumsilicat bei einem Überschuß an Natronlauge eine Aufschlämmung von Kristallkeimbildungszentren herstellt und diese dann mit Natriumsilicat zu einem Zeolithen mit dem Molverhältnis $SiO_2/Al_2O_3$ von etwa 5 umsetzt.

Durch die "$SiO_2$-Verunreinigung" im aus der Ablauge hergestellten Aluminat scheint die Kristallkeimbildung verbessert zu werden, so daß die für die Kristallisation des Zeoliths notwendige Zeit stark verkürzt werden kann.

Das Gleiche gilt für die Herstellung der Zeolithen vom A- und X-Typ.

Die Erfindung ist nachstehend anhand der Beispiele erläutert:

**Beispiel 1**

1500 Liter salzsaure Bleicherde-Aufschlußlösung (17,7 g/Liter $Al_2O_3$; 8,6 g/Liter $Fe_2O_3$) werden mit 66 kg CaO unter kräftigem Rühren auf pH 6,7 gebracht. Danach werden zur Verbesserung der Filtrierbarkeit der ausgefallenen Hydroxide ($Al(OH)_3$ bzw. $Fe(OH)_3$) 50 g Flockungsmittel, gelöst in 5 Liter Wasser, dazugegeben.

Nach einer Reaktionszeit von 4 Stunden wird das Hydroxidgemisch in einer Filterpresse abfiltriert.

Der Filterkuchen (512 kg Hydroxidgemisch mit 90 % $H_2O$) wird zu 30 kg NaOH-Schuppen, die in einem Behälter aus korrosionsbeständigem Stahl vorgelegt sind, gegeben. Das sich verflüssigende Gemisch wird dann aufgeheizt und eine Stunde bei 90 - 95°C gehalten.

Nach Abkühlung auf 80°C wird die Natriumaluminatlösung in der Filterpresse vom Eisenoxidhydrat abgetrennt.

631 kg Natriumaluminatlösung (3,3 % $Al_2O_3$; 3,55 $Na_2O$) werden mit 169 kg NaOH (50 %-ig) und 29 kg NaOH (Schuppen) versetzt, so daß 830 kg Lösung mit 2,5 % $Al_2O_3$ und 14,5 % NaOH resultieren.

Nun wird zu 265,6 kg vorgelegtem Natriumwasserglas (41° Be, 28,6 % $SiO_2$) unter intensivem Rühren die auf 20-25°C abgekühlte Aluminatlösung (830 kg) gegeben. Aus der zunächst klaren Lösung bildet sich dann nach kurzer Zeit die Aufschlämmung der Kristallkeimbildungszentren. Nach 20 Minuten Rühren und Erwärmen auf 40°C wird die Masse filtriert und gewaschen.

301 kg dieser abfiltrierten Masse (TS 26 %) werden mit 421 kg Natriumwasserglas (41° Be), 145 kg NaOH (7,5 %-ig) und 90 kg Wasser verrührt, auf 98°C aufgeheizt und 4 Stunden bei dieser Temperatur gehalten.

Nach dieser Reaktionszeit hat sich kristallisierter Y-Zeolith mit einer Kristallinität von 100 % gebildet.

**Beispiel 2**

1500 Liter schwefelsaure Bleicherde-Aufschlußlösung (17,7 g/Liter $Al_2O_3$, 8,6 g/Liter $Fe_2O_3$) werden mit Calciumoxid unter kräftigem Rühren auf einen pH-Wert von 3 neutralisiert. Danach wird der ausgefallene Gips über eine Filterpresse abgetrennt, und das Filtrat wird durch weitere Zugabe von CaO auf pH 6,6 gebracht.

Wie in Beispiel 1 werden nach dem Hinzufügen von 50 g Flockungsmittel, gelöst in 5 Liter Wasser, und einer Reaktionszeit von 4 Stunden die Hydroxide von Aluminium und Eisen abfiltriert und entsprechend weiterverarbeitet.

Das anfallende Eisen-(III)-Oxidhydrat enthält noch etwas Gips, der aber die Wirksamkeit bei der $H_2S$-Entfernung nicht beeinträchtigt.

Der nach diesem Verfahren gewonnene Y-Zeolith hat ebenfalls nach einer Reaktionszeit von 4 Stunden eine Kristallinität von 100 %.

**Beispiel 3**

In 1 Liter einer 80° C warmen Natriumsilikatlösung mit 81 g/Liter $SiO_2$ und 24 g/Liter $Na_2O$ wird 1 Liter einer Natriumaluminatlösung mit 33 g/Liter $Al_2O_3$ und 47 g/Liter kräftig eingerührt. Die Natriumaluminatlösung wurde wie in Beispiel 1 beschrieben, hergestellt und mit Ätznatron auf den gewünschten $Na_2O$-Gehalt aufgestockt. Nach 8 Stunden Reaktionszeit bei 80° C, während der langsam gerührt wird, filtriert man den entstandenen A-Zeolith ab, wäscht und trocknet ihn (bis ca. 20 % Hydratwasser). Man erhält einen kristallisierten A-Zeolith mit einem Calciumbindevermögen von 130 g Ca/g des wasserfreien Produktes.

**Beispiel 4**

Für die Synthese eines Zeolithen vom Y-Typ wird eine Natriumsilikatlösung mit 83,5 g $Na_2O$/Liter und 62 g $SiO_2$/Liter auf 95° C erhitzt und mit einer Natriumaluminatlösung, die 71 g $Na_2O$/Liter bzw. 66 g $Al_2O_3$/Liter enthält und ebenfalls auf 95° C erhitzt wird, 30 min. intensiv vermischt. Die nach Beispiel 1 anfallende Natriumaluminatlösung (33 g $Al_2O_3$/Liter bzw. 35,5 g $Na_2O$/Liter) muß auf die Hälfte eingedampft werden, daß das benötigte $Na_2O/Al_2O_3$-Verhältnis erhalten wird. Das Molverhältnis $SiO_2:Al_2O_3$ des Komponentengemisches beträgt 2,5. Außerdem liegt das Molverhältnis $Na_2O$: $SiO_2$ bei 2 und das Molverhältnis von $Na_2O$: $Al_2O_3$ bei 5.

Nach einer Reaktionszeit (ohne Rühren) von 2 Stunden wird der kristallisierte Zeolith abfiltriert, gewaschen und getrocknet.

**Anwendungsbeispiel**

Zur Bestimmung der Wirksamkeit des erfindungsgemäß erhaltenen Eisen-(III)-Oxidhydrats als Gasreinigungsmasse wird ein sich aus 4 Vol.-% Schwefelwasserstoff, 42 Vol.-% $CO_2$, 52 Vol.-% Methan und 2 Vol.-% Wasser zusammensetzendes Gas bei Raumtemperatur mit einer Raumgeschwindigkeit von etwa 900 $h^{-1}$ über 500 ml des nach Beispiel 1 erhaltenen Eisen-(III)-Oxidhydrats, das sich in einem stehenden Reaktor befindet, geleitet; nach 5 Stunden wird der Schwefelgehalt in der Masse analytisch bestimmt.

Der Schwefelgehalt beträgt 35 %. Im Vergleich dazu wurden an bekannten Gasreinigungsmassen etwa 30 % gemessen.

**Patentansprüche**

1. Verfahren zur Aufarbeitung von aluminium- und eisenhaltigen sauren Abwässern, wobei man

(a) die kleine Mengen an kolloidaler Kieselsäure enthaltenden sauren Abwässer zur Ausfällung des Aluminiumhydroxid und des Eisen-(III)-Oxidhydrats bis knapp unter den Siedepunkt erhitzt und mit Calciumoxid und/oder Calciumhydroxid neutralisiert;

(b) den erhaltenen Aluminiumhydroxid-Eisen-(III)-Hydroxid-Niederschlag bis zur Auflösung des Aluminiumhydroxids als Aluminat mit Natriumhydroxid behandelt;

(c) den hinterbleibenden Eisen-(III)-Oxidhydrat-Niederschlag von der Natriumaluminatlösung abtrennt, auswäscht, trocknet und das Eisen-(III)-Oxidhydrat zur Verwendung als Gasreinigungsmasse pelletiert oder durch thermische Behandlung in zur Verwendung als Pigment geeignetes Eisen-(III)-Oxid überführt;

(d) und die Natriumaluminatlösung durch Umsetzen mit einer Wasserglaslösung in einen kristallinen Zeolith überführ.

2. Verfahren nach Anspruch 1, dadurch gekennzeichnet, daß man bei Verwendung von Eisen-(II)-haltigen Abwässern die Ausfällung in der Stufe (a) in Berührung mit einem sauerstoffhaltigen Gas durchführt.

3. Verfahren nach Anspruch 1 oder 2, dadurch gekennzeichnet, daß man von einem sauren Abwasser mit folgender Durchschnittsanalyse ausgeht:

$Al^{3+}$ 12 bis 16 g/Liter;
$Fe^{3+}$ 4 bis 6 g/Liter;
$Ca^{2+}$ 2 bis 4 g/Liter;
$Mg^{2+}$ 2 bis 4 g/Liter;
$SiO_2$ 0.2 bis 0.4 g/Liter;
$Cl^-$ 65 bis 90 g/Liter;
freie HCl 4 bis 6 g/Liter.

4. Verfahren nach einem der Ansprüche 1 bis 3 dadurch gekennzeichnet, daß man die sauren Abwässer in der Stufe (a) bis auf einen pH-Wert von 3 bis 8 vorzugsweise von 6,6 bis 6,7, neutralisiert.

5. Verfahren nach Anspruch 1 oder 2, dadurch gekennzeichnet, daß man bei Verwendung von schwefelsäuren Abwässern vor der Stufe (a) eine Vorneutralisation mit Calciumoxid und/oder Calciumhydroxid bis zu einem pH-Wert von nicht mehr als etwa 3 durchführt und das abgeschiedene Calciumsulfat abfiltriert.

**Claims**

1. A process for the treatment of acid waste water containing aluminium and iron, wherein
(a) the acid waste water containing small amounts of colloidal silicic acid is heated to just below boiling point so as to precipitate aluminium hydroxide and hydrated iron (III) oxide and is neutralised with calcium oxide and/or calcium hydroxide;
(b) the resultant aluminium hydroxide iron (III) hydroxide precipitate is treated with sodium hydroxide until dissolution of the aluminium hydroxide as aluminate;
(c) the remaining hydrated iron (III) oxide precipitate is separated from the sodium aluminate solution, washed, dried and the hydrated iron (III) oxide is pelletised for use as a gas-purifying medium or is converted by thermal treatment into iron (III) oxide suitable for use as pigment;
(d) and the sodium aluminate solution is converted into a crystalline zeolite by reaction with a water glass solution.
2. A process according to Claim 1, characterised in that when using waste water with an iron (II) content the precipitation in step (a) is carried out in contact with an oxygen-containing gas.
3. A process according to Claim 1 or 2, characterised in that the starting material is an acid waste water with the following average analysis:
$Al^{3+}$ from 12 to 16 g/litre;
$Fe^{3+}$ from 4 to 6 g/litre;
$Ca^{2+}$ from 2 to 4 g/litre;
$Mg^{2+}$ from 2 to 4 g/litre;
$SiO_2$ from 0.2 to 0.4 g/litre;
$Cl^-$ from 65 to 90 g/litre;
free HCl from 4 to 6 g/litre.
4. A process according to any one of Claims 1 to 3, characterised in that the acid waste water in step (a) is neutralised to a pH value of from 3 to 8, preferably from 6.6 to 6.7.
5. A process according to Claim 1 or 2, characterised in that when using sulphuric acid waste water, prior to step (a), a preneutralisation is carried out with calcium oxide and/or calcium hydroxide to a pH value of not more than about 3 and the precipitated calcium sulphate is filtered off.

**Revendications**

1. Procédé de traitement des eaux usées acides contenant de l'aluminium et du fer, dans lequel:
a) pour précipiter de l'hydroxyde d'aluminium et l'oxyde de fer (III) hydraté, on chauffe les eaux usées acides contenant de petites quantités de silice colloidale, jusqu'à une température juste inférieure au point d'ébullition et on les neutralise au moyen d'oxyde de calcium et/ou d'hydroxyde de calcium;
b) on traite le précipité d'hydroxyde d'aluminiumhydroxyde de fer (III) ainsi obtenu au moyen d'hydroxyde de sodium jusqu'à la dissolution de l'hydroxyde d'aluminium en aluminate;
c) on sépare le précipité d'oxyde de fer (III) hydraté restant de la solution d'aluminate de sodium, on le lave et on le sèche, puis on granule l'oxyde de fer (III) hydraté pour pouvoir l'utiliser en qualité de produit pour l'épuration des gaz, ou encore on le transforme par un traitement thermique en oxyde de fer (III) approprié pour être utilisé comme pigment;
d) et on transforme la solution d'aluminate de sodium en une zéolite cristalline en la décomposant au moyen d'une solution de verre soluble.
2. Procédé selon la revendication 7, caractérisé en ce que, dans le cas de l'utilisation d'eaux usées contenant du fer (II), on effectue la précipitation réalisée dans la phase (a) en contact avec un gaz contenant de l'oxygène.
3. Procédé selon la revendication 1 ou 2, caractérisé en ce qu'on part d'eaux usées acides possédant l'analyse moyenne suivante:
$Al^{3+}$ 12 à 16 g/litre
$Fe^{3+}$ 4 à 6 g/litre
$Ca^{2+}$ 2 à 4 g/litre;
$Mg^{2+}$ 2 à 4 g/litre;
$SiO_2$ 0,2 à 0,4 g/litre;
$Cl^-$ 65 à 90 g/litre;
HCl libre 4 à 6 g/litre;
4. Procédé selon l'une des revendications 1 à 3, caractérisé en ce qu'on neutralise les eaux usées acides dans la phase (a) jusqu'à un pH de 3 à 8, de préférence de 6,6 à 6,7.
5. Procédé selon la revendication 1 ou 2, caractérisé en ce que, dans le cas de l'utilisation d'eaux usées acides du type sulfurique, avant la phase (a), on procède à une neutralisation préalable au moyen d'oxyde de calcium et/ou d'hydroxyde de calcium pour obtenir une valeur de pH de pas plus d'environ 3 et on filtre le sulfate de calcium précipité.